# EUROPEAN PATENT APPLICATION

(11) **EP 4 102 160 A1**
(43) Date of publication of application: **14.12.2022**
(21) Application number: 22175873.3
(22) Date of filing: 27.05.2022
(51) Int. Cl.: F25D 17/04, F25D 21/14

(54) **REFRIGERATOR**

(30) Priority: 10.06.2021 CN 202110645491
(71) Applicant: BSH Hausgeräte GmbH, 81739 München (DE)
(72) Inventor: Chen, Xiupeng, Nanjing, 210046 (CN); Shen, Guike, Nanjing, 210000 (CN); Xia, Guoqing, Nanjing, 210046 (CN); Zhou, Xuan, Nanjing, 210046 (CN)

(57) **Abstract**

This application provides an improved refrigerator, including: a drain assembly configured to guide water in the refrigerator into a water container at a lower portion of the refrigerator. The drain assembly includes a drain valve. The drain valve includes: a valve body, including a water inlet and a drain outlet, where the water inlet is adapted for water to flow into the valve body, and the drain outlet is adapted for water to flow out of the valve body; and a water passage, located between the water inlet and the drain outlet and including a first cavity and a second cavity that are arranged side by side. The drain valve further includes a water valve, configured to isolate the first cavity from the second cavity or communicate the first cavity with the second cavity. Based on the special design of the water passage and the water valve of the drain valve, the height of the drain assembly using the drain valve can be lowered. During manufacture and assembly of the refrigerator, the interference and restriction of the drain assembly on mounting and assembly of other components are reduced. Gravity of the water valve has less impact on the sensitivity of the water valve, and the drain assembly can be more sensitive.

## Description

### TECHNICAL FIELD

This application relates to the technical field of household appliances, and in particular, to a refrigerator.

### BACKGROUND

For some existing refrigerators, water (such as defrosted water in the evaporator or accumulated water in the storage compartment) in the refrigerator needs to be drained out of the refrigerator by using the drain assembly, and complex drain pipes are mostly disposed in the refrigerator to prevent external hot wet air from flowing into the refrigerator through drain pipes. However, such drain pipes are usually bulky and are not sensitive enough.

### SUMMARY

According to an aspect of embodiments of this application, an improved refrigerator with a more sensitive and smaller drain assembly is provided.

A refrigerator includes a drain assembly configured to guide water in the refrigerator into a water container at a lower portion of the refrigerator. The drain assembly includes a drain valve. The drain valve includes: a valve body, including a water inlet and a drain outlet, where the water inlet is adapted for water to flow into the valve body, and the drain outlet is adapted for water to flow out of the valve body; and a water passage, located between the water inlet and the drain outlet and including a first cavity and a second cavity that are arranged side by side. The drain valve further includes a water valve, configured to isolate the first cavity from the second cavity or communicate the first cavity with the second cavity.

Based on the special design of the water passage and the water valve of the drain valve, the height of the drain assembly using the drain valve can be lowered. Gravity of the water valve has less impact on the sensitivity of the water valve, and the drain assembly can be more sensitive.

In a possible implementation, the water valve includes a first valve plate located between the first cavity and the second cavity, where the first valve plate is adapted to communicate the first cavity with the second cavity under the action of water flow.

In a possible implementation, the valve body includes an end surface between the first cavity and the second cavity; and the drain valve includes a first valve plate that overlaps the end surface when the first cavity is isolated from the second cavity.

In a possible implementation, the first valve plate is disposed inclined downwards in a direction from the first cavity to the second cavity, and an angle between the first valve plate from top to bottom and a vertical direction is an acute angle.

In a possible implementation, the valve body includes a barrier located between the first cavity and the second cavity, where the barrier is located on one side of the first valve plate close to the first cavity.

In a possible implementation, the valve body further includes a second divisional wall that is located between the first cavity and the second cavity and is inclined towards the first cavity from bottom to top, where the first valve plate is located on one side of the second divisional wall close to the second cavity; and the first valve plate overlaps the second divisional wall when the first cavity is isolated from the second cavity.

In a possible implementation, the first valve plate includes a first connection portion at an upper end and a first main body portion at a lower end, where the first connection portion is configured to connect the first valve plate to the valve body, and the first main body portion is movable relative to the first connection portion.

In a possible implementation, the valve body includes a box-shaped body and a cover coupled to the box-shaped body; and the water valve includes a first valve plate, where the first valve plate includes a first connection portion clamped between the cover and the box-shaped body and a first main body portion that is movable relative to the first connection portion, and the first main body portion is located between the first cavity and the second cavity.

In a possible implementation, a bottom wall of the first cavity is inclined downwards in a direction towards the second cavity.

In a possible implementation, the valve body includes a water inlet pipe portion located upstream of the first cavity, where the water inlet is provided at the water inlet pipe portion, and a water outlet of the water inlet pipe portion is located above the first cavity.

In a possible implementation, the drain valve includes: an air inlet; an air passage, located between the air inlet and the water inlet; and an air valve, located in the air passage, where the air valve is adapted to open the air passage when a pressure in the air passage is less than an external pressure, and close the air passage when the pressure in the air passage is equal to the external pressure.

In a possible implementation, the air passage includes a third cavity located in the valve body, where the air inlet is located in the third cavity; and the air valve includes a second valve plate located in the third cavity.

In a possible implementation, the second valve plate is horizontally disposed above the air inlet.

In a possible implementation, the air passage further includes a third cavity located outside the water passage, where the air valve is located in the third cavity.

In a possible implementation, the first cavity is in air communication with the third cavity, so that air flows towards the water inlet from the third cavity.

In a possible implementation, the refrigerator includes a first divisional wall that is located between the first cavity and the third cavity and that extends from bottom to top.

In a possible implementation, the valve body includes a box-shaped body and a cover coupled to the box-shaped body, where the water valve and the air valve are both located in the box-shaped body or the cover.

### BRIEF DESCRIPTION OF THE DRAWINGS

The included accompanying drawings are used for providing further understanding to the present invention and are incorporated in this application to constitute a part of this application. The accompanying drawings illustrate embodiments of the present invention and explain the principle of the present invention together with the specification.
FIG. 1 is a partial cross-sectional view of a refrigerator according to an embodiment of this application.
FIG. 2 is an exploded view of a drain assembly for a refrigerator according to an embodiment of this application.
FIG. 3 is an exploded view of a drain valve according to an embodiment of this application.
FIG. 4 is a left view of a drain valve according to an embodiment of this application.
FIG. 5a and FIG. 5b are cross-sectional views taken along line B-B' of a drain valve according to an embodiment of this application, where FIG. 5a shows a state in which a water valve is closed; and FIG. 5b shows a state in which the water valve is opened.
FIG. 6a and FIG. 6b are cross-sectional views taken along line A-A' of a drain valve according to an embodiment of this application, where FIG. 6a shows a state in which an air valve is closed; and FIG. 6b shows a state in which the air valve is opened.

### DETAILED DESCRIPTION

The technical solutions of this application are clearly and completely described below with reference to specific embodiments. Apparently, the described embodiments are merely some rather than all of the embodiments of this application. All other embodiments obtained by a person of ordinary skill in the art based on the embodiments of this application without creative efforts shall fall within the protection scope of this application.

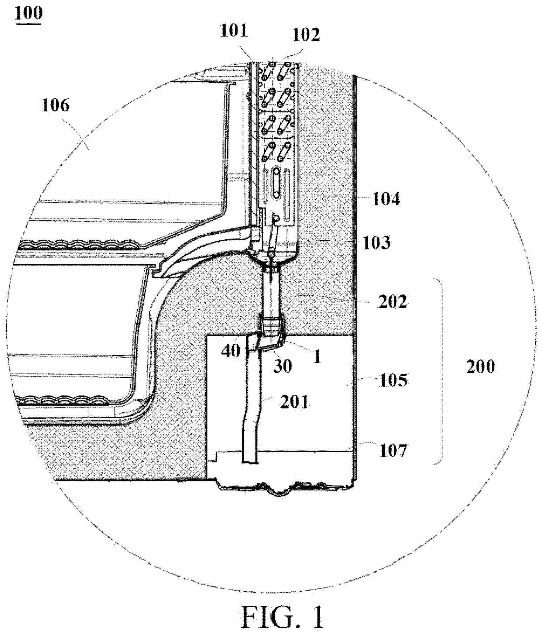

FIG. 1 is a partial cross-sectional view of a refrigerator 100 according to an embodiment of the present invention.

FIG. 1 shows an air-cooled refrigerator 100. The refrigerator 100 includes an air passage 101, an evaporator 102 located in the air passage 101, a water pan 103, a drain assembly 200, and a water container 107 located in a mechanical room 105. The refrigerator 100 further includes a storage compartment 106. As shown in the figure, the refrigerator 100 further includes a door configured to open or close the storage compartment 106, and the air passage 101 is in communication with the storage compartment 106.

The water pan 103 is located below the evaporator 102 and is configured to receive defrosted water of the evaporator 102. A water inlet end of the drain assembly 200 is in communication with the water pan 103, and a water outlet end is located above the water container 107. The drain assembly 200 includes a drain valve 1.

In other embodiments, the refrigerator 100 may alternatively be a direct-cooled refrigerator 100. As not shown in the figure, the water inlet end of the drain assembly 200 is in communication with the storage compartment 106 to drain water in the storage compartment 106, and the water outlet end is located above the water container 107. The drain assembly 200 includes the drain valve 1.

It may be understood that, both the air-cooled refrigerator 100 and the direct-cooled refrigerator 100 need to drain water, for example, to drain the defrosted water of the evaporator 102 or accumulated water/condensation water in the storage compartment 106 to the water container 107. To maintain operating efficiency and/or reduce power consumption, the drain assembly 200 needs to be closed when no water is drained, to prevent external air from flowing into the refrigerator 100.

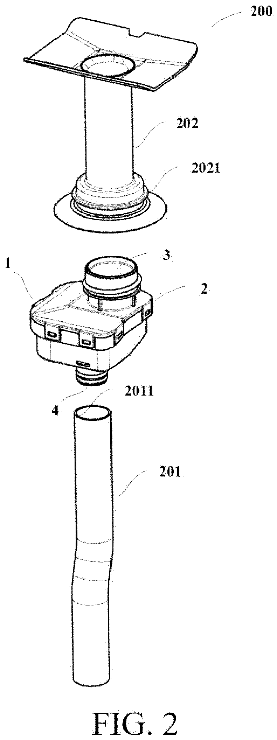

FIG. 2 is an exploded vertical view of a drain assembly 200 for a refrigerator 100 according to an embodiment of the present invention.

The drain valve 1 includes a valve body 2. The valve body 2 includes a water inlet 3 and a drain outlet 4. Water may flow into the valve body 2 through the water inlet 3, and the water flowing into the valve body 2 may flow out of valve body 2 through the drain outlet 4. The drain valve 1 includes a closed state and an open state. When the drain valve 1 is in the open state, the drain assembly 200 is open, and the water can successfully flow into the valve body 2 through the water inlet 3 and then flow out of the valve body 2 through the drain outlet 4. When the drain valve 1 is in the closed state, the drain assembly 200 is closed, and water can flow into the valve body 2 through the water inlet 3 but cannot flow out of the valve body 2 through the drain outlet 4.

The drain assembly 200 may further include a first drain pipe 202. The first drain pipe 202 is connected upstream of the water inlet 3, and to-be-drained water in the refrigerator 100 can flow into the valve body 2 through the first drain pipe 202.

The drain assembly 200 may further include a second drain pipe 201. The second drain pipe 201 is connected downstream of the drain outlet 4, and the water flowing out of the drain outlet 4 flows into the water container 107 through the second drain pipe 201.

In the implementation shown in FIG. 2, the drain assembly 200 includes both the first drain pipe 202 and the second drain pipe 201. However, in a possible implementation, the drain assembly 200 may alternatively include only one of the first drain pipe 202 and the second drain pipe 201. With proper length of the first drain pipe 202 or the second drain pipe 201, the drain assembly may be used to successfully guide water in the refrigerator 100 into the water container 107.

Since refrigerators 100 of different models have different shapes, sizes, or internal structures, the drain assembly 200 usually needs to be specially designed, which imperceptibly increases production and maintenance costs. In this embodiment, the drain valve 1 may control a water passage 5. To be specific, the first drain pipe 202 is connected upstream of the drain valve 1 and/or the second drain pipe 201 is connected downstream of the drain valve 1. Therefore, there is no need to redesign a new drain assembly 200 for the refrigerators 100 of different models, and only the size and shape of the first drain pipe 202 and/or the second drain pipe 201 need to be adjusted, so that the first drain pipe 202 and/or the second drain pipe 201 are used in combination with the drain valve 1 in this embodiment of this application.

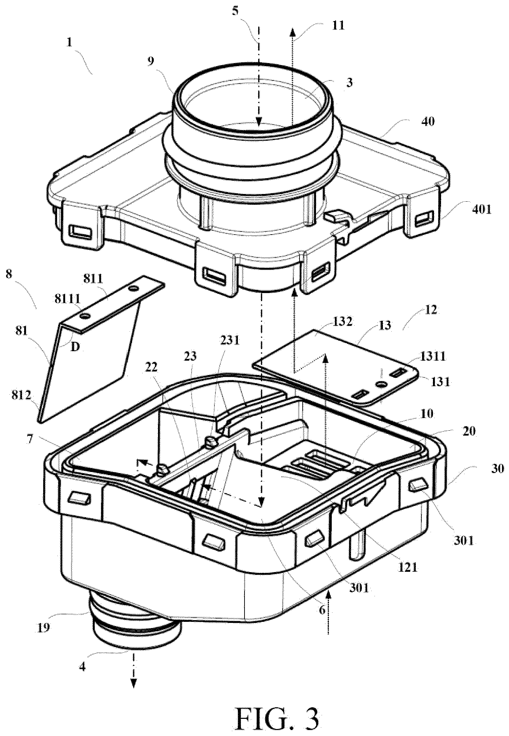

FIG. 3 is an exploded view of a drain valve 1 according to an embodiment of this application.

Referring to FIG. 3, the drain valve 1 includes a water passage 5 between the water inlet 3 and the drain outlet 4. The water passage 5 is located in the valve body 2. The drain valve 1 further includes a water valve 8 located in the water passage 5.

The water passage 5 includes a first cavity 6 and a second cavity 7 that are arranged side by side. The first cavity 6 is located upstream of the second cavity 7 in a water flow direction. The water valve 8 is located between the first cavity 6 and the second cavity 7. The water valve 8 is configured to isolate the first cavity 6 from the second cavity 7 or communicate the first cavity 6 with the second cavity 7. The drain valve 1 is in the closed state when the first cavity 6 and the second cavity 7 are isolated by the water valve 8; and the drain valve 1 is in the open state when the first cavity 6 is in communication with the second cavity 7.

In the drain valve 1 with such a configuration, the water valve 8 is protected by the valve body 2 and is not prone to the interference of other components. Gravity of the water valve 8 has less impact on the sensitivity of the water valve 8, and the drain valve 1 can be more sensitive.

Based on the special design of the water passage 5 of the drain valve 1, the height of the drain assembly 200 using the drain valve 1 can be lowered. During manufacture and assembly of the refrigerator 100, the interference and restriction of the drain assembly 200 on mounting and assembly of other components are reduced.

The water valve 8 includes a first valve plate 81 located between the first cavity 6 and the second cavity 7.

In a specific implementation, referring to FIG. 3, the first valve plate 81 may be made of a variable flexible material (such as silicone or rubber), and an end of the first valve plate 81 is coupled to the valve body 2. When there is no water or only a small amount of water flows into the first cavity 6, the first valve plate 81 blocks an end surface 21 between the first cavity 6 and the second cavity 7, and the first cavity 6 is isolated from the second cavity 7. When the water in the first cavity 6 is accumulated to a specific amount, the water pressure acts on the first valve plate 81 and overcomes the elasticity and/or gravity of the first valve plate 81, so that the first valve plate 81 deforms/tilts up, the deformed portion/tilted portion is separated from the end surface 21, the first cavity 6 and the second cavity 7 are communicated, and the water flows into the second cavity 7 from the first cavity 6 and then flows out of the valve body 2 through the drain outlet 4. When there is no water in the first cavity 6 or the amount of the water is insufficient, the deformed portion/tilted portion releases the elastic potential energy/gravitational potential energy, restores to the original shape, and blocks the end surface 21 between the first cavity 6 and the second cavity 7. In this case, air cannot flow out of the water inlet 3 through the second cavity 7 and the first cavity 6.

In a variant example, as not shown in the figure, the first valve plate 81 may alternatively be a non-deformable material (such as a metal sheet). When the water in the first cavity 6 is accumulated to a specific amount, the water pressure acts on the first valve plate 81 and overcomes the gravity of the first valve plate 81, so that the first valve plate 81 is lifted (in which the center of gravity is raised), the first valve plate 81 is separated from the end surface 21, and the first cavity 6 and the second cavity 7 are communicated. When there is a little water or no water in the first cavity 6, the first valve plate 81 is lowered due to the gravity to overlap the end surface 21, so that the first cavity 6 is isolated from the second cavity 7. It should be noted that, the "non-deformable" herein does not mean that the first valve plate 81 absolutely cannot be deformed, but means that the achievement of the invention objective of this embodiment may not rely on deformation properties of the first valve plate 81.

In another variant example, an elastic member (not shown in the figure) connected between the first valve plate 81 and the valve body 2 is further included. The elasticity and/or gravity of the first valve plate 81 and/or elasticity of the elastic member are overcome under the action of the water pressure in the first cavity 6, and the first cavity 6 and the second cavity 7 are communicated. When there is a little water in the first cavity 6, the elastic potential energy/gravitational potential energy of the first valve plate 81 and/or the elastic potential energy of the elastic member are released, so that the first valve plate 81 restores to the original position and/or shape, and the first cavity 6 is isolated from the second cavity 7.

The drain valve 1 is applied to the drain assembly 200 of the refrigerator 100. Water in the refrigerator 100 may flow into the first cavity 6 through the drain outlet 4. Under the action of the water flow, the first cavity 6 and the second cavity 7 are communicated by the first valve plate 81, and the water is drained out of the valve body 2 through the drain outlet 4. After the drainage, the first cavity 6 and the second cavity 7 are isolated again by the first valve plate 81. In this case, external hot wet air cannot flow into the refrigerator 100 through the drain outlet 4, and the refrigerator 100 does not need to consume additional power for cooling heat, which is more power-saving. In addition, less moisture enters the refrigerator 100, and frosting and freezing are alleviated.

Still referring to FIG. 3, the first valve plate 81 is disposed inclined downwards in a direction from the first cavity 6 to the second cavity 7, and an angle between the first valve plate 81 from top to bottom and a vertical direction is an acute angle. With such a configuration, when the first valve plate 81 is located at a position where the first cavity 6 is isolated from the second cavity 7. the gravity of the first valve plate 81 also acts on the valve body 2 that supports the first valve plate 81. Compared with a vertically disposed shape, the first valve plate 81 is attached to the valve body 2 more closely, providing a better seal effect and reducing a probability that external air flows into the first cavity 6.

The valve body 2 includes a second divisional wall23 disposed between the first cavity 6 and the second cavity 7. The second divisional wall 23 extends from the bottom of the first cavity 6 or the second cavity 7 to the top of the first cavity 6 or the second cavity 7. At least one opening for water to flow into the second cavity 7 from the first cavity 6 is disposed on the second divisional wall 23. When the drain valve 1 is open, the first valve plate 81 is spaced apart from the second divisional wall 23, so that the water flows from the first cavity 6 into the second cavity 7 through the openings. When the drain valve 1 is closed, the first valve plate 81 overlaps the end surface 21 of the second divisional wall 23 and blocks the overflow openings, and the first cavity 6 is isolated from the second cavity 7.

The second divisional wall 23 may include a barrier 22 of a fence-shaped structure disposed close to the bottom of the second divisional wall 23. The overflow openings may be disposed on the barrier 22, and water may flow into the second cavity 7 through gaps on the barrier 22.

Furthermore, the second divisional wall 23 is located on one side of the first valve plate 81 close to the first cavity 6, so that the first valve plate 81 is blocked by the second divisional wall 23 when the first valve plate 81 is located at the position where the first cavity 6 is isolated from the second cavity 7. When an internal pressure of the refrigerator 100 is less than an external pressure of the refrigerator 100, the first valve plate 81 cannot be reversely opened, thereby reducing a probability that the external air flows into the refrigerator 100 through the water passage 5.

Furthermore, the barrier 22 provides an overflow passage for water to flow through. When there is no water flowing through the overflow passage, the first valve plate 81 overlaps the barrier 22 to isolate the first cavity 6 from the second cavity 7. The barrier 22 supports the first valve plate 81 more evenly, thereby reducing a probability of deformation and seal failure of the first valve plate 81 due to insufficient local support.

Furthermore, the second divisional wall 23 may be inclined towards the first cavity 6 from bottom to top, so that when the first valve plate 81 is located at the position where the first cavity 6 is isolated from the second cavity 7, the first valve plate 81 may overlap the end surface 21 of the second divisional wall 23 to be kept in an inclined state. In this case, the first valve plate 81 can be kept in a good sealed state. In addition, since the second divisional wall 23 provides good support, the first valve plate 81 can be kept in the sealed state without relying on its own strength, a fatigue loss is reduced, and the sensitivity of the first valve plate 81 can be remained for a long time.

Still referring to FIG. 3, the first valve plate 81 may include a first connection portion 811 and a first main body portion 812. The first main body portion 812 is coupled to the valve body 2, and the first main body portion 812 is movable relative to the first connection portion 811 and may isolate the first cavity 6 from the second cavity 7 or communicate the first cavity 6 with the second cavity 7 in a movement path. Specifically, the first main body portion 812 may overlap the end surface 21 of the second divisional wall 23 to block the overflow openings, so that the first cavity 6 is isolated from the second cavity 7. The first main body portion 812 is alternatively deformable/movable relative to the first connection portion 811 to be spaced apart from the second divisional wall 23, so that the first cavity 6 and the second cavity 7 are communicated.

The first connection portion 811 may include first pin holes 8111, and the valve body 2 includes first pins 231. The first pins 231 are inserted into the first pin holes 8111 to relatively fix the first valve plate 81 to the valve body 2. In such a connection manner, a mounting process can be simplified, and steps such as gluing and attaching can be reduced.

The first pins 231 may be located on the second divisional wall 23. Furthermore, the first pins 231 are located on the top of the second divisional wall 23.

The first connection portion 811 is located at an edge of the first valve plate 81. With such a structure, when the first valve plate 81 is impacted by the water flow, the first main body portion 812 has a larger torque and is more likely to be deformed, so that the drain valve 1 is more sensitive.

The first connection portion 811 includes a flange located at the edge of the first valve plate 81, and the first pin holes 8111 may be located on the flange.

Furthermore, the first connection portion 811 is located at an upper portion of the first valve plate 81, and the first main body portion 812 is located at a lower portion of the first valve plate 81. With such a configuration, the gravity of the first main body portion 812 can better act to improve the seal performance when the first cavity 6 is isolated from the second cavity 7.

Still referring to FIG. 3, the valve body 2 may include a box-shaped body 30 and a cover 40. The cover 40 may be coupled to the box-shaped body 30.

The box-shaped body 30 includes clamp holes 401, and the cover 40 includes buckles 301. The clamp holes 401 and the buckles 301 are engaged with each other to connect the box-shaped body 30 to the cover 40. In this way, the box-shaped body 30 and the cover 40 may be manufactured separately and then assembled. For example, the box-shaped body 30 and the cover 40 are formed by using low-cost processes such as injection molding and mold pressing, which is easy to manufacture. The connection between the box-shaped body 30 and the cover 40 may alternatively be implemented in other manners such as threaded connection, bonding, and welding. However, such connection manners are not focuses of this application, and details are not described herein.

Edges of the box-shaped body 30 and/or the cover 40 have a seal structure, so that a joint is well sealed when the box-shaped body 30 is coupled to the cover 40.

Two groove-shaped regions are formed on two sides of the second divisional wall 23 on the box-shaped body 30. When the cover 40 is coupled to the box-shaped body 30, the two groove-shaped regions respectively define the first cavity 6 and the second cavity 7 together with the cover 40.

When the cover 40 is coupled to the box-shaped body 30, the seal structure is formed between the cover 40 and the second divisional wall 23, to prevent air from flowing into the first cavity 6 through a gap between the second divisional wall 23 and the cover 40 when the first cavity 6 is isolated from the second cavity 7.

Furthermore, the first connection portion 811 is clamped between the second divisional wall 23 and the cover 40 when the cover 40 is coupled to the box-shaped body 30. With such a configuration, according to a first aspect, the connection between the first valve plate 81 and the valve body 2 can be strengthened and are not prone to fall off. According to a second aspect, the first connection portion 811 may be used as a seal member between the cover 40 and the second divisional wall 23 to improve the seal effect. Furthermore, the flange of the first connection portion 811 is clamped between the second divisional wall 23 and the cover 40.

Still referring to FIG. 3, the valve body 2 includes a water inlet pipe portion 9, the water inlet 3 is provided at the water inlet pipe portion 9, and a water outlet 92 of the water inlet pipe portion 9 is located right above the first cavity 6. With such a configuration, water flowing into the drain valve 1 may directly flow into the valve body 2 in a shortest flow path, and the water flow is smoother.

Furthermore, the water inlet pipe portion 9 is located on the cover 40, and the water inlet 3 is also located on the cover 40.

Still referring to FIG. 3, the drain outlet 4 is located on the box-shaped body 30, and specifically, is located right below the second cavity 7. With such a configuration, water in the water valve 8 may directly flow out of the drain valve 1 in a shortest path, and the water flow is smoother.

In a possible implementation, the valve body 2 further includes a water outlet pipe portion 19. An upper end of the water outlet pipe portion 19 is in communication with the second cavity 7. The water outlet pipe portion 19 is opposite to the second cavity 7. Furthermore, the water outlet pipe portion 19 is located on the box-shaped body 30, and the water outlet 92 is also located on the box-shaped body.

Furthermore, the water inlet pipe portion 9 and the water outlet pipe portion 19 are at least partially staggered in a horizontal direction.

Still referring to FIG. 3 together with FIG. 2, FIG. 5a, FIG. 5b, FIG. 6a, and FIG. 6b, the water inlet pipe portion 9 includes a first threaded portion 91, and correspondingly, includes a first thread fitting portion 2021 at an end portion of the first drain pipe 202. The first threaded portion 91 may fit with the first thread fitting portion 2021 to connect the first drain pipe 202 to the valve body 2, so that the first drain pipe communicates with the valve body.

The water outlet pipe portion 19 includes a second threaded portion 191, and correspondingly, includes a second thread fitting portion 2011 at an end portion of the second drain pipe 201. The second threaded portion 191 may fit with the second thread fitting portion 2011 to connect the second drain pipe 201 to the valve body 2, so that the second drain pipe 201 communicates with the valve body 2.

It may be understood that, the connection between the drain valve 1 and the first drain pipe 202 or the second drain pipe 201 may be implemented in other manners such as clamping, bonding, and welding, and the invention objective of this embodiment of the present invention can still be achieved.

Still referring to FIG. 3, the drain valve 1 further includes an air inlet 10, an air passage 11, and an air valve 12 located in the air passage 11. The air passage 11 is located between the air inlet 10 and the water inlet 3. The air valve 12 is adapted to open the air passage 11 when a pressure in the air passage 11 is less than an external pressure, and close the air passage 11 when the pressure in the air passage 11 is equal to the external pressure.

When the drain valve 1 with such a configuration is applied to the refrigerator 100, and a pressure in the refrigerator 100 is less than the external pressure, the air valve 12 is opened, and the external air flows into the refrigerator 100 through the air passage 11. As the pressure in the refrigerator 100 increases, the air valve 12 is closed to prevent more hot wet air from flowing into the refrigerator 100. In this way, according to an aspect, a pressure difference between inside and outside of the refrigerator 100 is smaller, the force to open the door is reduced, and user experience is better. According to another aspect, no conventional water sealed structure is used, so that air cannot flow into the refrigerator 100 through the water valve 8, and it is less likely to produce abnormal sound when the door is opened, thereby improving the user experience.

The air passage 11 further includes a third cavity 20 located on the valve body 2. The air inlet 10 is located at the bottom of the third cavity 20.

The air valve 12 includes a second valve plate 13 located in the third cavity 20. The second valve plate 13 may be made of a flexible material (such as silicone or rubber) and is deformable under the action of an external force. When the internal pressure of the refrigerator 100 is equal to the external pressure, since pressures on both sides of the second valve plate 13 are the same or equivalent, the second valve plate 13 may not deform or the pressure difference is not sufficient to deform the second valve plate 13, the first valve plate 81 closes the air inlet 10, and the air valve 12 is in a state of closing the air passage 11. When the internal pressure of the refrigerator 100 is less than the external pressure, since a pressure on an outer side (a side far away from the third cavity 20) surface is greater than a pressure on an inner side (a side close to the third cavity 20) surface of the second valve plate 13, the second valve plate 13 overcomes limitation of gravity and/or its own elasticity to deform towards an inner portion of the third cavity 20 and is spaced apart from a cavity wall of the third cavity 20, so that the external air flows into the third cavity 20 through a gap and then flows into the refrigerator 100 through the water inlet 3. As more air flows into the refrigerator 100, the internal and external pressures of the refrigerator 100 gradually reach a balanced state. In this case, a pressure difference between the pressure on the outer side surface and the pressure on the inner side surface of the second valve plate 13 gradually decreases, and the second valve plate 13 restores to the original shape due to the gravity and/or its own elasticity, to close the air inlet 10 again.

After the door of the refrigerator 100 is closed, as a temperature in the storage compartment 106/the air passage 101 decreases, a temperature and pressure of the air in the refrigerator 100 decrease, and consequently, the internal pressure is less than the external pressure. Therefore, a large force is required to open the door again. In this embodiment of this application, the air valve 12 may be opened when the internal pressure is less than the external pressure, so that the external air flows into the refrigerator 100; and the air valve 12 is closed when the internal pressure is equivalent to the external pressure, so that the inside and outside of the refrigerator 100 are kept in a completely isolated state. In this way, a smaller force is required to open the door again, and energy consumption of the refrigerator 100 is reduced.

In a variant example, the second valve plate 13 may alternatively be made of a rigid material. When the internal pressure of the refrigerator 100 is less than the external pressure, since the pressure on the outer side surface is greater than the pressure on the inner side surface of the second valve plate 13, and the pressure overcomes the gravity of the second valve plate 13, so that the second valve plate 13 is lifted (in which the center of gravity is raised) and is spaced apart from the cavity wall of the third cavity 20, the air inlet 10 is exposed, and the external air flows into the third cavity 20 through the gap and then flows into the refrigerator 100 through the water inlet 3. As more air flows into the refrigerator 100, the internal and external pressures of the refrigerator 100 gradually reach the balanced state. In this case, the pressure difference between the pressure on the outer side surface and the pressure on the inner side surface of the second valve plate 13 gradually decreases, and the second valve plate 13 is lowered to the original position due to the gravity, to close the air inlet 10 again.

In another variant example, the air valve 12 may further include an elastic member connected between the third cavity 20 and the second valve plate 13. When the internal pressure of the refrigerator 100 is less than the external pressure, the pressure overcomes the elasticity of the elastic member, so that the air inlet 10 is opened. When the internal pressure of the refrigerator 100 is equal to the external pressure, the second valve plate 13 blocks the air inlet 10 again due to the elasticity of the elastic member.

Still referring to FIG. 3, the second valve plate 13 is horizontally disposed above the air inlet 10. With such a configuration, the second valve plate 13 can be attached to the third cavity 20 more closely due to the gravity of the second valve plate 13, to close the air passage 11, and the sensitivity of the air valve 12 can be adjusted by appropriately adjusting the gravity of the second valve plate 13.

The third cavity 20 is located outside the water passage 5, and with such a configuration, water is less likely to flow into the air passage 11, thereby alleviating the problem that the sensitivity is reduced due to water in the air valve 12.

Still referring to FIG. 3, the third cavity 20 is in air communication with the first cavity 6, so that air may flow into the first cavity 6 from the third cavity 20 and then flows into the refrigerator 100 through the water inlet 3. Such a configuration has a simple and compact structure.

A first divisional wall 121 is disposed on the valve body 2. The first divisional wall 121 is located between the first cavity 6 and the third cavity 20 and extends from bottom to top. With such a configuration, the first divisional wall 121 can prevent water from flowing into the third cavity 20 from the first cavity 6 as much as possible, thereby maintaining efficient operating of the air passage 11.

Furthermore, a passage is formed above the first divisional wall 121, and the first cavity 6 may be in communication with the third cavity 20 through the passage. With such a configuration, the first cavity 6 and the third cavity 20 are isolated in water but is in air communication with each other.

Still referring to FIG. 3, the second valve plate 13 includes a second connection portion 131 and a second main body portion 132 that is movable relative to the second connection portion 131. The second valve plate 13 is coupled to the valve body 2 by using the second connection portion 131. Positions for closing and opening the air inlet 10 are provided in a movement path of the second main body portion 132.

The second connection portion 131 is located at an edge of the second valve plate 13. With such a configuration, when the external pressure acts on the second valve plate 13, a larger torque is formed on the second valve plate 13, and the second valve plate 13 is more likely to be deformed. In other words, the air valve 12 is more sensitive.

The second connection portion 131 includes second pin holes 1311, the third cavity 20 includes second pins 302 at the bottom, and the second pin holes 1311 are engaged with the second pins 302 to connect the second valve plate 13 to the valve body 2. With such a connection manner, a mounting process can be simplified, and steps such as gluing and attaching can be reduced.

The valve body 2 may include the box-shaped body 30 and the cover 40 coupled to the box-shaped body 30. A groove region is provided on the box-shaped body 30. When the box-shaped body 30 is coupled to the cover 40, the cover 40 covers the groove region to jointly define the third cavity 20.

An abutting portion 402 extending towards the second connection portion 131 is disposed on the cover 40. When the cover 40 is coupled to the box-shaped body 30, the abutting portion 402 abuts against the second connection portion 131 to further fix the second valve plate 13, thereby reducing a risk of falling off and displacement of the second valve plate 13.

Furthermore, the abutting portion 402 abuts between the second pin hole 1311 and the second main body portion 132. When the second valve plate 13 moves/deforms, magnitude of movement/deformation of the second connection portion 131 decreases, thereby reducing a probability that regions where the second pin holes 1311 are located are damaged due to frequent movement/deformation.

Although both the water valve 8 and the air valve 12 are located on the box-shaped body 30 as shown in the figures, apparently, there is at least another variant form. For example, both the air valve 12 and the water valve 8 are located on the cover 40. For example, in a case that shapes of the box-shaped body 30 and the cover 40 shown in FIG. 2 are not changed and only a connection relationship between the first valve plate 81 and the second valve plate 13 is changed, both the first connection portion 811 and the second connection portion 131 are coupled to the cover 40, and positions of the first main body portion 812 and the second main body portion 132 are not changed. In this case, the invention objective of this embodiment still can be achieved. Based on the configuration of this embodiment or a similar embodiment, the box-shaped body 30 and the cover 40 are easy to manufacture and assemble and have good seal performance, thereby reducing a probability of water leak and air leak.

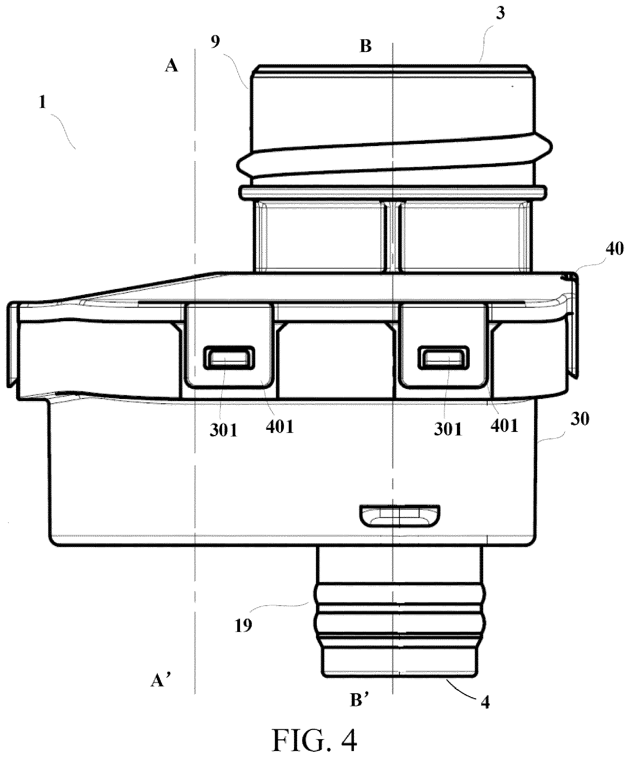

FIG. 4 is a left view of a drain valve 1 according to an embodiment of this application.

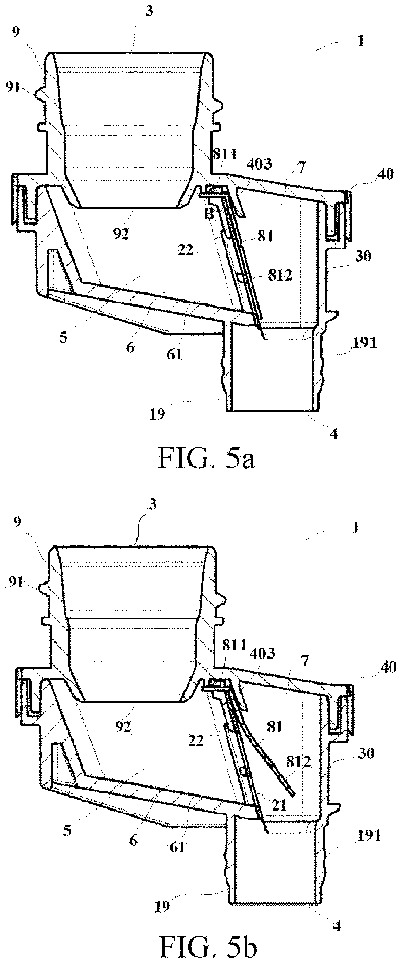

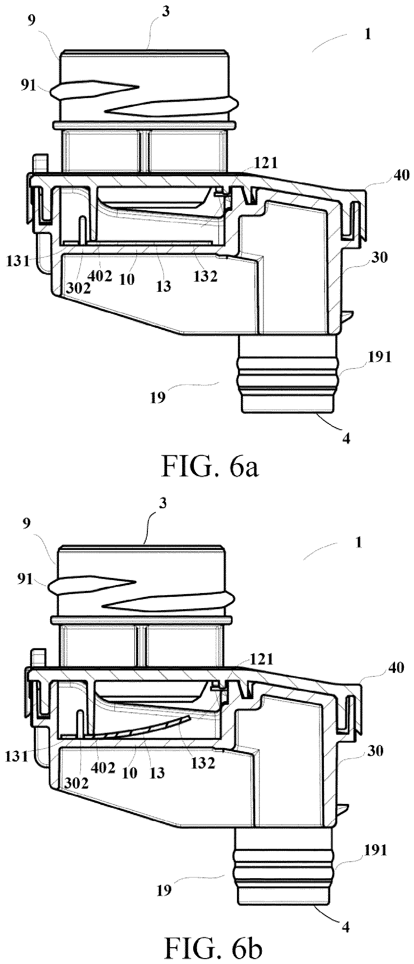

A working principle of the drain valve 1 provided in the embodiments of this application is exemplarily described with reference to FIG. 5a, FIG. 5b, FIG. 6a, and FIG. 6b. FIG. 5a and FIG. 5b are cross-sectional views taken along line B-B' of a drain valve 1 according to an embodiment of this application, where FIG. 5a shows a state in which a water valve 8 is closed; and FIG. 5b shows a state in which the water valve 8 is opened. FIG. 6a and FIG. 6b are cross-sectional views taken along line A-A' of a drain valve 1 according to an embodiment of this application, where FIG. 6a shows a state in which an air valve 12 is closed; and FIG. 6b shows a state in which the air valve 12 is opened.

As shown in FIG. 5b, a water pressure acts on the first valve plate 81 after water flows into the first cavity 6 through the water inlet 3, so that the first valve plate 81 deforms, the first main body portion 812 tilts up, the first main body portion 812 is spaced apart from the end surface 21 to form a gap, and the water in the first cavity 6 flows into the second cavity 7 through the gap and then flows out of the drain valve 1 through the drain outlet 4. When the first valve plate 81 deforms and the first main body portion 812 tilts up, the elastic potential energy and the gravitational potential energy of the first valve plate 81 are increased. Next, when the water in the first cavity 6 decreases or there is no water in the first cavity 6, the elastic potential energy and the gravitational potential energy of the first valve plate 81 are released, so that the first valve plate 81 restores to the original shape and position, the first main body portion 812 overlaps the end surface 21, and the first cavity 6 is isolated from the second cavity 7, as shown in FIG. 5a.

When the first valve plate 81 restores to the state shown in FIG. 5a, the external air cannot flow into the refrigerator 100 through the water passage 5 because the first valve plate 81 has blocked the water passage. In addition, due to the blocking of the barrier 22 and/or the end surface 21, even if the internal pressure of the refrigerator 100 is less than the external pressure, the first valve plate 81 may not deform or move into the first cavity 6 to cause the air to flow into the refrigerator 100 through the water passage 5.

Referring to FIG. 5a and FIG. 5b, a bottom wall 61 of the first cavity 6 is inclined downwards in a direction towards the second cavity 7. With such a configuration, the water in the first cavity 6 is collected at an end of the first cavity 6 close to the second cavity 7, and the water valve 8 can be opened even if there is a small amount of water. Therefore, according to a first aspect, the water valve 8 is more sensitive; and according to a second aspect, accumulated water in the first cavity 6 is reduced.

When the internal pressure of the refrigerator 100 is equivalent to the external pressure and there is no need to drain water, for the state of the drain valve 1, reference may be made to FIG. 5a and FIG. 6a. In this case, both the water valve 8 and the air valve 12 are in a closed state, and the drain valve 1 is in communication with the inside of the refrigerator 100 to form a relatively closed space. When the internal pressure of the refrigerator 100 is reduced, the second valve plate 13 moves/deforms under the action of the pressure, as shown in FIG. 6b, external air flows into the refrigerator 100 through the air inlet 10, the third cavity 20, the first cavity 6, and the water inlet 3, and the elastic potential energy and the gravitational potential energy of the second valve plate 13 are increased in such a process. When the internal pressure and the external pressure of the refrigerator 100 are balanced, the second valve plate 13 releases the elastic potential energy and the gravitational potential energy to restore to the original position/ shape, to block the air inlet 10 again, as shown in FIG. 6a.

Still referring to FIG. 1, the refrigerator 100 further includes a foamed layer 104, and at least one part of the drain assembly 200 is located in the foamed layer 104. A person skilled in the art may understand that, the part located in the foamed layer 104 needs to be placed at a preset position, and then a foaming process can be implemented to bury the part in the foamed layer 104, to help the drain assembly 200 with a larger volume to be modularly assembled into the refrigerator 100 step by step, thereby reducing a risk of displacement of the drain assembly 200 during the foaming process and making it easy to assemble and disassemble.

For example, the cover 40 is located in the foamed layer 104, and the box-shaped body 30 is located in the mechanical room 105. Therefore, during manufacture of the refrigerator 100, the cover 40 may be first placed at a preset position, then the foaming process is implemented, and finally the box-shaped body 30 is coupled to the cover 40 from the mechanical room 105.

For example, the first drain pipe 202 is located in the foamed layer 104, and the drain valve 1 is located in the mechanical room 105. The first drain pipe 202 may be assembled at a predetermined position before the foaming, and then the drain valve 1 is coupled to the first drain pipe 202 from the mechanical room 105 after the foaming.

In a specific implementation, as shown in FIG. 3, the first connection portion 811 and the first main body portion 812 of the first valve plate 81 are disposed at an angle. The angle between the first connection portion 811 and the first main body portion 812 in a stretched state is D, and the first valve plate 81 is made of an elastic material (such as rubber or silicone). An angle between an extending direction of the end surface 21 or the second divisional wall 23 and an extending direction of the first connection portion 811 is C (referring to FIG. 5b), where D<C. With such a configuration, when the first valve plate 81 is located at a closed position, the first main body portion 812 overlaps the end surface 21 or the second divisional wall 23, but the first valve plate 81 is not in the stretched state and tends to be contracted. In this case, the elasticity facilitates improvement of the seal performance of the first valve plate 81.

Although specific implementations have been described above, such implementations are not intended to limit the scope of this application, even if only a single implementation is described relative to specific features. The feature examples provided in this application are intended to be illustrative rather than limiting, unless otherwise stated. During specific implementation, according to an actual requirement, in a technically feasible case, the technical features of one or more dependent claims may be combined with the technical features of the independent claims, and the technical features from the corresponding independent claims may be combined in any appropriate way instead of using just specific combinations listed in the claims.

The various specific implementations described above and shown in the accompanying drawings are only used to illustrate this application, but are not all of this application. Any variation made by a person of ordinary skill in the art to this application within the scope of the basic technical concept of this application shall fall within the protection scope of this application.

## Claims

1. A refrigerator (100), comprising a drain assembly (200) configured to guide water in the refrigerator (100) into a water container (107) at a lower portion of the refrigerator (100), wherein the drain assembly (200) comprises a drain valve (1), **characterized in that**, the drain valve (1) comprises:
a valve body (2), comprising a water inlet (3) and a drain outlet (4), wherein the water inlet (3) is adapted for water to flow into the valve body (2), and the drain outlet (4) is adapted for water to flow out of the valve body (2); and
a water passage (5), located between the water inlet (3) and the drain outlet (4) and comprising a first cavity (6) and a second cavity (7) that are arranged side by side, wherein the drain valve further comprises a water valve (8), configured to isolate the first cavity (6) from the second cavity (7) or communicate the first cavity (6) with the second cavity (7).

2. The refrigerator (100) according to claim 1, **characterized in that**, the water valve (8) comprises a first valve plate (81) located between the first cavity (6) and the second cavity (7), wherein the first valve plate (81) is adapted to communicate the first cavity (6) with the second cavity (7) under the action of water flow.

3. The refrigerator (100) according to claim 1 or 2, **characterized in that**, the valve body (2) comprises an end surface (21) between the first cavity (6) and the second cavity (7); and the drain valve (1) comprises a first valve plate (81) that overlaps the end surface (21) when the first cavity (6) is isolated from the second cavity (7).

4. The refrigerator (100) according to claim 2 or 3, **characterized in that**, the first valve plate (81) is disposed inclined downwards in a direction from the first cavity (6) to the second cavity (7), and an angle between the first valve plate (81) from top to bottom and a vertical direction is an acute angle.

5. The refrigerator (100) according to one of the claims 2 - 4, **characterized in that**, the valve body (2) comprises a barrier (22) located between the first cavity (6) and the second cavity (7), wherein the barrier (22) is located on one side of the first valve plate (81) close to the first cavity (6).

6. The refrigerator (100) according to one of the claims 2 - 5, **characterized in that**, the valve body (2) further comprises a second divisional wall (23) that is located between the first cavity (6) and the second cavity (7) and is inclined towards the first cavity (6) from bottom to top, wherein the first valve plate (81) is located on one side of the second divisional wall (23) close to the second cavity (7); and the first valve plate (81) overlaps the second divisional wall (23) when the first cavity (6) is isolated from the second cavity (7).

7. The refrigerator (100) according to one of the claims 2 - 6, **characterized in that**, the first valve plate (81) comprises a first connection portion (811) at an upper end and a first main body portion (812) at a lower end, wherein the first connection portion (811) is configured to connect the first valve plate (81) to the valve body (2), and the first main body portion (812) is movable relative to the first connection portion (811).

8. The refrigerator (100) according to any one of the preceding claims, **characterized in that**, the valve body (2) comprises a box-shaped body (30) and a cover (40) coupled to the box-shaped body (30); and the water valve (8) comprises a first valve plate (81), wherein the first valve plate (81) comprises a first connection portion (811) clamped between the cover (40) and the box-shaped body (30) and a first main body portion (812) that is movable relative to the first connection portion (811), and the first main body portion (812) is located between the first cavity (6) and the second cavity (7).

9. The refrigerator (100) according to any one of the preceding claims, **characterized in that**, a bottom wall (61) of the first cavity (6) is inclined downwards in a direction towards the second cavity (7) and/or **characterized in that**, the valve body (2) comprises a water inlet pipe portion (9) located upstream of the first cavity (6), wherein the water inlet (3) is disposed at the water inlet pipe portion (9), and a water outlet (92) of the water inlet pipe portion (9) is located above the first cavity (6).

10. The refrigerator (100) according to any one of the preceding claims , **characterized in that**, the drain valve (1) comprises:
an air inlet (10);
an air passage (11), located between the air inlet (10) and the water inlet (3); and
an air valve (12), located in the air passage (11), wherein the air valve (12) is adapted to open the air passage (11) when a pressure in the air passage (11) is less than an external pressure, and close the air passage (11) when the pressure in the air passage (11) is equal to the external pressure.

11. The refrigerator (100) according to claim 10, **characterized in that**,
the air passage (11) comprises a third cavity (20) located in the valve body (2), wherein the air inlet (10) is located in the third cavity (20); and the air valve (12) comprises a second valve plate (13) located in the third cavity (20).

12. The refrigerator (100) according to claim 11, **characterized in that**, the second valve plate (13) is horizontally disposed above the air inlet (10).

13. The refrigerator (100) according to one of the claims 10 - 12, **characterized in that**, the air passage (11) further comprises a third cavity (20) located outside the water passage (5), wherein the air valve (12) is located in the third cavity (20), in particular that, the first cavity (6) is in air communication with the third cavity (20), so that air flows towards the water inlet (3) from the third cavity (20).

14. The refrigerator (100) according to claim 13, **characterized by** comprising a first divisional wall (121) that is located between the first cavity (6) and the third cavity (20) and that extends from bottom to top.

15. The refrigerator (100) according to one of the claims claim 10 - 14, **characterized in that**, the valve body (2) comprises a box-shaped body (30) and a cover (40) coupled to the box-shaped body (30), wherein the water valve (8) and the air valve (12) are both located in the box-shaped body (30) or the cover (40).
